# EUROPEAN PATENT SPECIFICATION

(11) **EP 0 741 879 B1**
(45) Date of publication and mention of the grant of the patent: **11.08.1999**
(21) Application number: 94923909.9
(22) Date of filing: 29.06.1994
(51) Int. Cl.: G05D 16/20, F15B 9/09

(54) **DIRECT DRIVE SERVOVALVE HAVING MOTOR POSITION SENSOR**
DIREKTGESTEUERTES SERVOVENTIL MIT EINEM POSITIONSENSOR DES MOTORS
SERVODISTRIBUTEUR A ACTIONNEMENT DIRECT AYANT UN DETECTEUR DE POSITION DU MOTEUR

(30) Priority: 27.01.1994 US 188255
(43) Date of publication of application: 13.11.1996
(73) Proprietor: HR TEXTRON INC., Valencia, CA 91355 (US)
(72) Inventor: ELROD, Alvon, C., Jr., Ventura, CA 93003 (US); MUTHS, Donald, A., Lake Hughes, CA 93532 (US); NICHOLS, Larry, L., Valencia, CA 91354 (US); SMITH, Robert, W., Encino, CA 91316 (US)
(74) Representative: Bailey, Richard Alan
(86) International application number: US9407351
(87) International publication number: WO9520781

(56) References cited:
- EP-B- 0 471 695
- DE-A- 3 504 222
- US-A- 5 285 715
- SOVIET INVENTIONS ILLUSTRATED, El section, week 8821, issued 1988, July 06, DERWENT PUBLICATIONS LTD., London; & SU,A,1348 966 (MOSC RADIO ELECTRN).

## Description

### Field of the Invention

This invention relates generally to direct drive servo valves and more particularly to a direct drive servo valve in which the motor rotor position is sensed to generate an electrical signal representative of that position.

### Background of the Invention

Torque motor driven spool valves are well known in the art including those which operate through the utilization of a rotary torque motor having a drive member extending from the rotor thereof into contact with the spool valve to directly reciprocate the spool valve within a bore provided in the valve housing to thereby control the flow of fluid from a source thereof to the load in response to electrical signals applied to the drive motor. Typical of such direct drive servo valves is that illustrated in U.S. Patent No. 4,793,377 issued December 27, 1988 to Larry E. Haynes et al. The invention described and claimed herein is an improvement over the direct drive servo valve disclosed in U.S. Patent No. 4,793,377 and therefore the disclosure of U.S Patent No. 4,793,377 is incorporated herein by this reference.

Other prior art known to applicant is U.S. Patent Nos. 4,197,474; 2,769,943; 2,697,016; 4,452,423; 4,339,737; and, 4,702,123 as well as Canadian Patent 601808 issued July 19, 1960 and United Kingdom Patent 1521668 issued August 16, 1978 and also EP-A-0471695 and DE-A-3504222. It is often a requirement in such prior art servo valves to have position feed back for utilization in closing a servo loop to cause the valve to operate properly under the conditions of the particular application. In the prior art, such position feed back is typically generated through the utilization of a linear variable differential transformer (LVDT) which is coupled to the spool valve to provide spool position feed back. Such LVDT's are extremely expensive and thus add to the cost of the valve significantly. In addition to the high cost of the LVDT special provisions generally are made to operate the LVDT "wet" in a hydraulic chamber in order to eliminate sealing and friction concerns. In addition, the method of connection of the LVDT to the spool is very critical and such a valve utilizing an LVDT is difficult to adjust at null and also requires complex electronics to properly process the input and output signals of the LVDT. The control loop closure in a typical servo system involves motor command and spool position feed back. Any looseness between the motor and spool connection results in servo valve instability.

In accordance with the present invention, there is provided a force motor as defined in appended Claim 1. The motor is intended for use with a hydraulic control system which includes a rotor having a shaft carrying a permanent magnet means and being supported by bearing means. Positioned about the rotor is a stator comprised of magnetically permeable laminates with the usual field windings disposed thereon. The rotor of the motor is designed and restricted so that it moves only through a limited angular motion less than 360°. Position sensor means is carried by the motor and produces an electrical signal representative of the rotary angular position of the rotor of the torque motor.

In accordance with a more specific aspect of the present invention, the position sensor comprises an analog HALL effect device positioned to sense the moving magnetic field associated with the position of the rotor. The moving magnetic field may be that generated by the permanent magnet means carried by the rotor shaft and used in conjunction with the normal operation of the motor. Alternatively, there may be provided a separate permanent magnet disposed upon the rotor shaft properly aligned with the permanent magnet means of the motor rotor and positioned adjacent the HALL effect device.

### Brief Description of the Drawings

Fig. 1 is a schematic representation in cross section illustrative of a limited angle direct drive servo valve constructed in accordance with the principles of the present invention;
Fig. 2 is a schematic representation showing a HALL effect device positioned adjacent permanent magnets for producing a position signal in accordance with the principles of the present invention;
Fig. 3 is a graph illustrating the output signal from a structure such as that illustrated in Fig. 2;
Fig. 4 is a schematic illustration of a limited angle rotary torque motor showing the position of a HALL effect sensor activated by the permanent magnet means carried by the rotor and normally used in the operation of the motor;
Fig. 5 is a schematic illustration similar to that of Fig. 4 but wherein a separate permanent magnet other than that used in the normal operation of the servo motor is used to activate the HALL effect device;
Fig. 6 is a graph illustrating the output from a potentiometer position sensor wherein the output electrical signal is linear;
Fig. 7 is a graph illustrating the output electrical signal of a position sensor wherein the electrical output signal is shaped according to a predetermined function;
Fig. 8 is an illustration showing a limited angle torque motor constructed in accordance with the principles of the present invention; and
Fig. 9 is a top view of a portion of the torque motor of Fig. 8 taken about the lines 11-11 thereof.

### Description of the Illustrative Embodiments

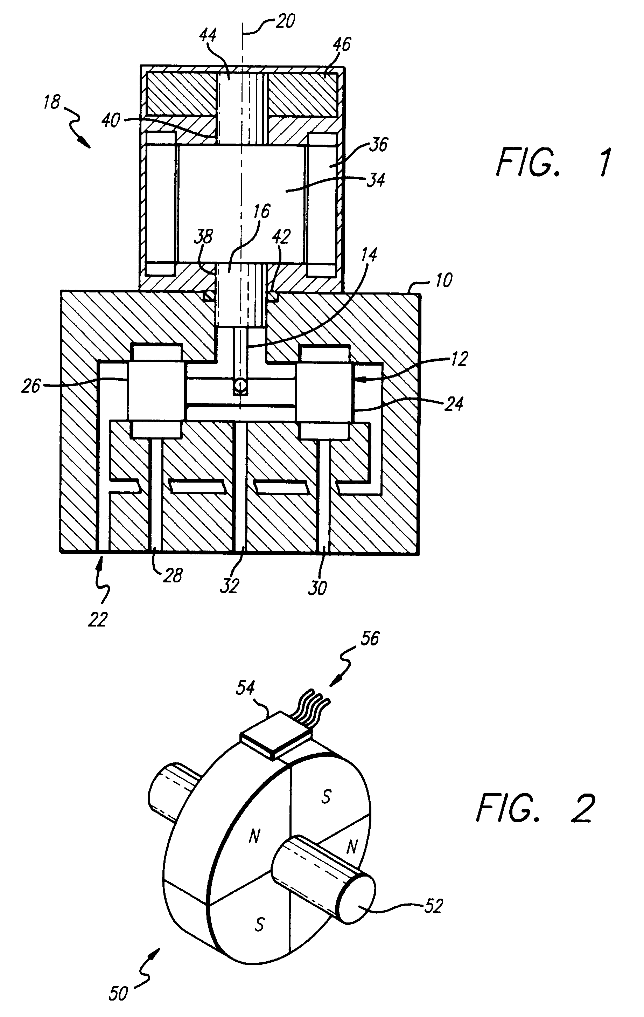

By referring now more particularly to Fig. 1 there is schematically illustrated a limited angle rotary to linear direct drive servo valve constructed in accordance with the principles of the present invention. As is therein shown, there is provided a housing 10 within which there is disposed a spool valve 12 for reciprocal movement responsive to angular displacement of a drive member 14 extending from the shaft 16 of the torque motor 18. As is well known to those skilled in the art and as illustrated in the prior art above referred to, the drive member 14 is eccentrically positioned on the shaft 16 so that as the shaft 16 rotates about its center line 20 the drive member 14 moves in such a way as to impart reciprocal movement to the spool valve 12. Such movement causes fluid under pressure which is applied to a port 22 and appears at opposite ends 24 and 26 of the spool valve 12 to be controlled. If the spool valve 12 moves to the right as viewed in Fig. 1, the fluid under pressure flows to a load (not shown) through the port 28 and alternatively, if the spool valve 12 moves to the left then the flow of fluid is through the port 30 to the load. In either case, the return flow is through the port 32.

As is well known to those skilled in the art, the torque motor 18 includes a permanent magnet 34 carried by the shaft 20 and disposed within and surrounded by field windings 36 carried upon an appropriate magnetically permeable core or laminate stack. The shaft 16 is supported by bearings 38 and 40 at opposite ends thereof. Under some applications, an appropriate seal 42 may be provided to isolate the fluid under pressure from the motor.

As is shown in Fig. 1 the shaft 16 has an extension 44 at the upper end thereof. Disposed adjacent this extension 44 is a position sensing means 46. The position sensing means 46 produces an output electrical signal which is proportional to the rotary angular position of the rotor of the torque motor 18. As above indicated, the position sensing means may take any form known to those skilled in the art which will provide an output electrical signal proportional to such angular rotary position.

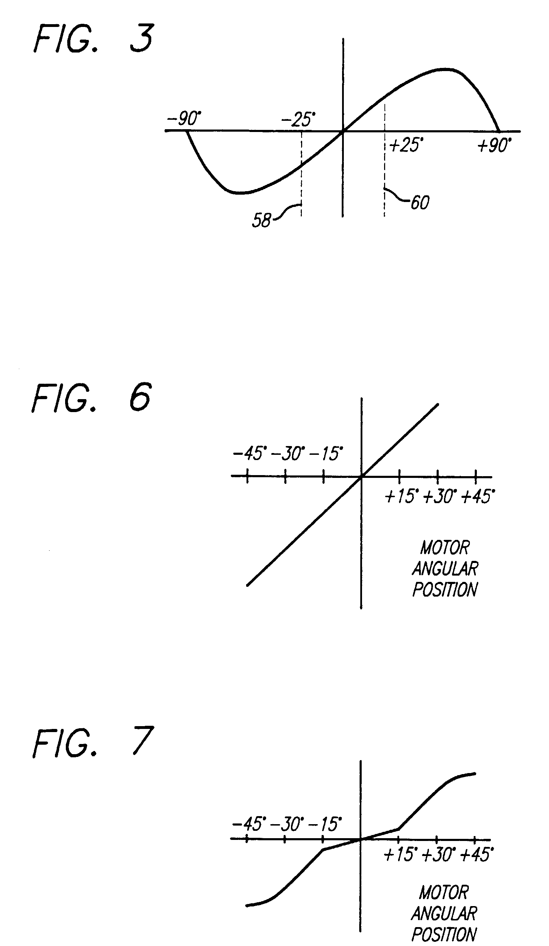

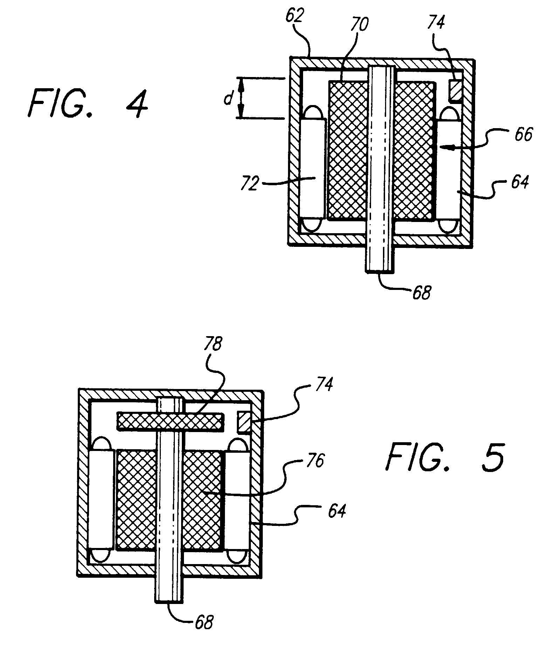

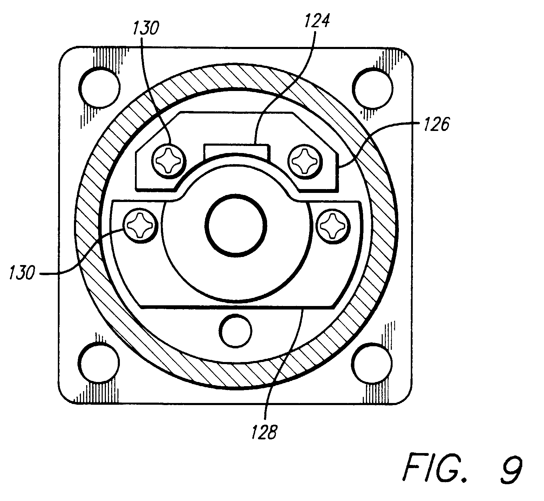

One preferred form of the angular position sensing means 46 is illustrated in Fig. 2 to which reference is hereby made. As is therein shown a permanent magnet 50 is carried on a shaft 52 and has four poles oriented thereabout and polarized alternatively as shown. Positioned adjacent the magnet is a HALL effect device 54 which has an electrical signal applied thereto and provides an output signal therefrom by way of the electrical leads shown at 56. It is well known to those skilled in the art that as the rotor 52 rotates through a 180° rotational cycle an output signal such as that shown in Fig. 3 is generated. In Fig. 3 spool position is shown on the abscissa and output voltage is shown on the ordinate. Thus, if the rotor 52 were permitted to rotate continuously a sine wave, much as that shown in Fig. 3, would be continuously generated. However, it will be remembered that the direct drive servo valve which is the subject matter of the present invention is a limited angle direct drive servo valve. That is, the rotor of the servo valve is limited in its rotation to a specified number of degrees less than 360°. For example, for the four pole apparatus as shown in Fig. 2, the limited angular rotation permitted would be in the order of ± 25° as is shown by the dashed lines 58 and 60 of Fig. 3. It will also be noted by those skilled in the art that the electrical output signal generated by the HALL effect device 54 is substantially linear over the range between ± 25°. If a two pole motor is utilized then the substantially linear operating range thereof would be extended to approximately ± 50°.

It will be recognized by those skilled in the art that the use of HALL effect devices as electrical sensors for commutation of rotating motors is well known. Such HALL effect devices are used as digital switches to sequentially switch coil winding current on and off at the appropriate time to provide torque for smooth motor rotation. Examples of such prior devices are illustrated in U.S. Patents 4,494,028 and 4,311,933. In each of these patents as well as others well known to those skilled in the prior art, the HALL effect devices are used as part of the commutation device for brushless direct current motors. In accordance with the present invention, the HALL effect device does not function as part of a commutation system but rather as above pointed out, is used to generate an electrical signal which is proportional to the precise positioning of the rotor within a limited angle as opposed to an on/off switched voltage which is typical in the prior art motors.

By reference to Fig. 4 there is illustrated one embodiment of a limited angle direct drive torque motor constructed in accordance with the principles of the present invention and utilizing a HALL effect device as a position sensor. The embodiment as illustrated in Fig. 4 includes a motor housing 62 within which there is positioned a stator 64 and a rotor 66. The rotor 66 includes a shaft 68 upon which there is disposed permanent magnet means 70. As is shown in Fig. 4 the permanent magnet means extends above the magnetically permeable core material 72 by an amount illustrated as "d". This provides an extension of the rotor carried permanent magnet means into the upper portion of the housing 62. Such extension causes the magnetic field generated by the permanent magnet means 70 to extend beyond the magnetically permeable core member 64 and into contact with a HALL effect device 74 which is positioned on the interior surface of the housing 62. The positioning of the HALL effect device 74 is such that the highest possible signal to noise ratio is generated when the permanent magnet means 70 rotates. To accomplish this, the HALL effect device 74 is positioned radially outwardly and/or longitudinally with respect to the permanent magnet means 70 as to just avoid magnetic saturation of the HALL effect device 74. Such adjustment may be accomplished by inserting material between the HALL effect device 74 and the inside surface of the housing 62 to bring the HALL effect device 74 closer to the permanent magnet means 70 or by shifting the HALL effect device 74 vertically up or down as viewed in Fig. 4 to accomplish the desired signal to noise ratio of the output signal from the HALL effect device. The HALL effect device may also be mounted upon the laminate stack of the stator if such a position provides the desirable signal to noise ratio.

Referring now more specifically to Fig. 5, there is illustrated a limited angle torque motor similar to that shown in Fig. 4 except that the permanent magnet means 76 carried on the shaft has been reduced in size to the standard size normally utilized in such torque motors as known to those skilled in the art. As is clearly evident from the illustration of Fig. 5, instead of extending the permanent magnet 66 as illustrated in Fig. 4, there is provided a separate and independent permanent magnet 78 which is affixed to the shaft 68 and rotates therewith. The added permanent magnet 78 must be properly oriented with regard to the permanent magnet means 76 so as to provide the desired rotor position with respect to the hydraulic null position of the servo valve as illustrated in Fig. 1 to which the motor is affixed. Again the HALL effect device 74 must be positioned as above described in order to provide a signal having the highest signal to noise ratio possible and thus the positioning is done so that magnetic saturation is just avoided.

If such is desired, the magnetization of the magnet 78 may be accomplished in such a way as to provide a tailored magnetic field thereby providing an output signal between the operating positions which is other than substantially linear. For example, the permanent magnet 78 may be magnetized in such a way as to provide a tailored output signal along the lines of that shown in Fig. 7. That is at approximately ± 15° of motor angular position from null the output signal from the HALL effect device is substantially linear and has a relatively shallow slope. However, between 15° and 30° on each side of null the slope increases and the signal is other than linear as is illustrated. This output signal may then be incorporated with other signal information and processed to provide appropriate feed back signals to the field windings to accomplish a desired positional relationship of the spool valve 12 in response to applied command signals.

It will be appreciated by those skilled in the art that limited angle rotary direct drive torque motors of the type shown in Figs. 4 and 5 are constructed in such a manner that the rotor positioning sensor is integrated into the motor housing and thus no additional structure is required on the valve as would be the case with a linear variable differential transformer (LVDT). It should further be recognized that the structures as shown in Figs. 4 and 5 may be operated either wet or dry and, since there is no direct physical contact between the rotor and the HALL effect sensor, there is no contamination or wear and thus a long position sensor life time results. Of the alternative embodiments shown in Figs. 4 and 5 the least expensive to manufacture is that shown in Fig. 4 sense the only additional element added to provide the rotor position sensing is the HALL effect device.

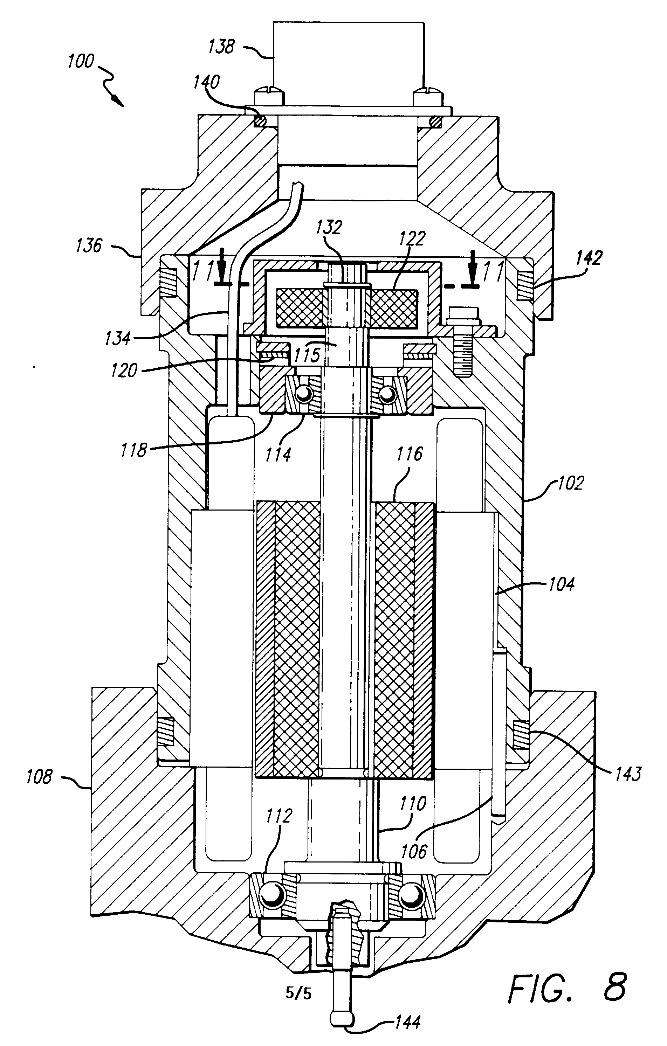

It should be understood by those skilled in the art that the limited angle torque motors utilized for direct drive servo valves and constructed in accordance with the present invention may take any form desired depending upon the particular application. One specific embodiment of such a motor is illustrated in Figs. 8 and 9 to which reference is hereby made. As is therein shown, the motor 100 includes a housing 102 within which there is positioned a stator 104 which is held in place within the housing 102 by an anti-rotation pin 106. The motor is positioned upon a valve housing 108 (partially shown). A rotor 110 is supported upon bearings 112 and 114 and carries permanent magnet means 116 as is well known to those skilled in the art. The bearing 114 is positioned within a bearing housing 118 and the rotor assembly is positioned and held in place to avoid back lash by an appropriate wave spring and shims 120 which urge the assembly downwardly toward the bearing 112. A separate permanent magnet 122 is carried upon an extension 115 of the shaft 110.

As is shown in Fig. 9 a HALL effect device 124 is held in place upon a bracket 126. An appropriate cover 128 is provided and the bracket and cover are secured with appropriate fasteners 130. A retainer ring 132 is disposed upon the shaft extension 115 to restrain any longitudinal movement of the permanent magnet 122. Appropriate wiring 134 is used for conducting signals to and from the motor and the sensor. A cover 136 is utilized over the motor and an appropriate housing for electrical apparatus 138 is secured to the top of the cover. Appropriate packing or O-rings such as shown at 140, 193 and 142 are utilized to seal the motor housing. An eccentrically disposed drive pin 144 extends from the shaft 110 and is utilized to engage a spool valve and move the same reciprocally as above described in conjunction with Fig. 1.

There has thus been disclosed a limited angle torque motor for utilization with a direct drive servo valve which incorporates as an integral part thereof a motor rotor angular position sensing apparatus including a HALL effect device.

## Claims

1. A limited angle force motor having stator motor (104) including field windings and rotor means including a shaft (110) disposed within said stator means and being rotatably movable through an angular position of less than 360° responsive to electrical signals applied to said field windings of said stator means, housing means (102), said stator means and said rotor means being disposed within said housing means, means (34) for applying electrical signals including command signals to said field windings to cause said rotor means to rotate toward a predetermined position, and a rotor position sensor for producing an analog electrical feed back signal characterized in that said rotor position sensor comprises:
a. a single HALL effect device (124) disposed within said housing means;
b. permanent magnet means (116) carried by said shaft for providing a magnetic field for activating said HALL effect device;
c. said HALL effect device being positioned relative to said permanent magnet means to provide substantially the best signal to noise ratio as said permanent magnet means rotates; and
d. said HALL effect device producing an electrical analog feed back signal proportional to the angular position by which said rotor deviates from a null position combining with said command signals to cause said rotor means to stop at said predetermined position.

2. A force motor as defined in Claim 1, wherein said analog electrical feed back signal includes a substantially linear portion extending through said null position and only said substantially linear portion of said analog electrical feed back signal is used for representing the angular position of said rotor.

3. A force motor as defined in Claim 1, wherein said permanent magnet means is an extension of rotor permanent magnet means used as a portion of said force motor.

4. A force motor as defined in Claim 1, wherein said permanent magnet means is a separate permanent magnet carried by said shaft with said HALL effect device disposed adjacent thereto.

5. A force motor as defined in Claim 1, wherein said HALL effect device is mounted upon an inner surface of said housing.

6. A force motor as defined in Claim 1, wherein said HALL effect device is mounted upon said stator means.

7. A force motor as defined in Claim 1, wherein said permanent magnet means is magnetized to provide a shaped magnetic field to produce a predetermined non-linear output analog electrical feed back signal from said HALL effect device over the operational portion of said output signal.

## Patentansprüche

1. Kraftmotor mit begrenztem Winkel, umfassend einen Statormotor (104) mit Feldwicklungen und ein Rotormittel mit einer Welle (110), das in dem Statormittel angeordnet ist und um eine Winkelposition von weniger als 360° als Reaktion auf elektrische Signale drehbeweglich ist, die an die Feldwicklungen des Statormittels angelegt werden, ein Gehäusemittel (102), wobei das Statormittel und das Rotormittel in dem Gehäusemittel angeordnet sind, Mittel (34) zum Anlegen elektrischer Signale, die Befehlssignale enthalten, an die Feldwicklungen, um das Rotormittel in eine Drehung in eine vorbestimmte Position zu versetzen, und einen Rotorpositionssensor zur Erzeugung eines analogen, elektrischen Rückführungssignals, dadurch gekennzeichnet, daß der Rotorpositionssensor umfaßt:
a) eine einzelne HALL-Effekt-Vorrichtung (124), die in dem Gehäusemittel angeordnet ist;
b) Permanentmagnetmittel (116), die von der Welle getragen werden, zur Bildung eines Magnetfeldes zum Aktivieren der HALL-Effekt-Vorrichtung;
c) wobei die HALL-Effekt-Vorrichtung relativ zu dem Permanentmagnetmittel positioniert ist, um im wesentlichen das beste Signal-Rausch-Verhältnis zu liefern, während sich das
d) wobei die HALL-Effekt-Vorrichtung ein elektrisches, analoges Rückführungssignal erzeugt, das zu der Winkelposition proportional ist, um welche der Rotor von einer Nullposition abweicht, um, in Kombination mit den Befehlssignalen, das Rotormittel an der vorbestimmten Position anzuhalten.

2. Kraftmotor nach Anspruch 1, wobei das analoge, elektrische Rückführungssignal einen im wesentlichen linearen Teil enthält, der durch die Nullposition verläuft, und wobei nur der im wesentlichen lineare Teil des analogen, elektrischen Rückführungssignals zur Darstellung der Winkelposition des Rotors verwendet wird.

3. Kraftmotor nach Anspruch 1, wobei das Permanentmagnetmittel eine Verlängerung des Rotorpermanentmaqnetmittels ist, die als Teil des Kraftmotors verwendet wird.

4. Kraftmotor nach Anspruch 1, wobei das Permanentmagnetmittel ein separater Permanentmagnet ist, der von der Welle getragen wird, wobei die HALL-Effekt-Vorrichtung daran angrenzend positioniert ist.

5. Kraftmotor nach Anspruch 1, wobei die HALL-Effekt-Vorrichtung an einer Innenfläche des Gehäuses befestigt ist.

6. Kraftmotor nach Anspruch 1, wobei die HALL-Effekt-Vorrichtung an dem Statormittel befestigt ist.

7. Kraftmotor nach Anspruch 1, wobei das Permanentmagnetmittel magnetisiert ist, um ein geformtes Magnetfeld zu bilden, um ein vorbestimmtes, analoges, elektrisches Rückführungssignal mit nichtlinearem Ausgang von der HALL-Effekt-Vorrichtung über den Operationsanteil des Ausgangssignals zu erzeugen.

## Revendications

1. Moteur force à angle limité possédant un moteur à stator (104) comportant des enroulements d'excitation et un moyen formant rotor comportant un arbre (110) disposé à l'intérieur dudit moyen formant stator et étant mobile en rotation sur une position angulaire inférieure à 360°, en étant sensible à des signaux électriques appliqués auxdits enroulements d'excitation dudit moyen formant stator, un moyen formant boîtier (102), ledit moyen formant stator et ledit moyen formant rotor étant disposés à l'intérieur dudit moyen formant boîtier, un moyen (34) destiné à appliquer des signaux électriques comprenant des signaux de commande auxdits enroulements d'excitation, de façon à faire en sorte de tourner ledit moyen formant rotor en direction d'une position prédéterminée, et un détecteur de position de rotor destiné à produire un signal de rétroaction électrique analogique, caractérisé en ce que ledit détecteur de position de rotor comprend:
a. un seul dispositif à effet Hall (124) disposé à l'intérieur dudit moyen formant boîtier;
b, un moyen formant aimant permanent (116) porté par ledit arbre pour produire un champ magnétique destiné à activer ledit dispositif à effet Hall;
c. ledit dispositif effet Hall étant positionné par rapport audit moyen formant aimant permanent de façon à produire sensiblement le meilleur rapport signal sur bruit pendant que ledit moyen formant aimant permanent tourne; et
d. ledit dispositif à effet Hall produisant un signal de rétroaction électrique analogique proportionnel à la position angulaire sur laquelle ledit rotor dévie par rapport à une position nulle, le combinant auxdits signaux de commande pour faire en sorte d'arrêter ledit moyen formant rotor à ladite position prédéterminée.

2. Moteur force selon la revendication 1, dans lequel ledit signal de rétroaction électrique analogique comprend une partie sensiblement linéaire s'étendant à travers la position nulle, et seule ladite partie sensiblement linéaire dudit signal de rétroaction électrique analogique est utilisée pour représenter la position angulaire dudit rotor.

3. Moteur force selon la revendication 1, dans lequel ledit moyen formant aimant permanent est une extension du moyen formant aimant permanent de rotor utilisé comme partie dudit moteur force.

4. Moteur force selon la revendication 1, dans lequel ledit moyen formant aimant permanent est un aimant permanent distinct porté par ledit arbre, ledit dispositif à effet Hall étant disposé au voisinage de celui-ci.

5. Moteur force selon la revendication 1, dans lequel ledit dispositif à effet Hall est monté sur une surface intérieure dudit boîtier.

6. Moteur force selon la revendication 1. dans lequel ledit dispositif à effet Hall est monté sur ledit moyen formant stator.

7. Moteur force selon la revendication 1. dans lequel ledit moyen formant aimant permanent est aimanté de façon à produire un champ magnétique formé, afin de produire un signal de rétroaction électrique analogique de sortie non linéaire prédéterminé à partir dudit dispositif à effet Hall sur la partie fonctionnelle dudit signal de sortie.
